# EUROPEAN PATENT SPECIFICATION

(11) **EP 3 907 395 B1**
(45) Date of publication and mention of the grant of the patent: **18.01.2023**
(21) Application number: 19914622.6
(22) Date of filing: 18.12.2019
(51) Int. Cl.: F02G 5/00, F01K 23/06, F25B 27/02, F25B 49/02

(54) **WASTE HEAT RECOVERY DEVICE, AND METHOD FOR CONTROLLING SAME**
VORRICHTUNG ZUR RÜCKGEWINNUNG VON ABWÄRME UND VERFAHREN ZU DEREN STEUERUNG
DISPOSITIF DE RÉCUPÉRATION DE CHALEUR PERDUE ET PROCÉDÉ DE COMMANDE ASSOCIÉ

(30) Priority: 07.02.2019 JP 2019020752
(43) Date of publication of application: 10.11.2021
(73) Proprietor: Mitsubishi Heavy Industries Marine Machinery & Equipment Co., Ltd., Nagasaki-shi Nagasaki 8508610 (JP)
(72) Inventor: FUJII, Satoshi, Nagasaki-shi, Nagasaki 850-8610 (JP); KAWANAMI, Akira, Nagasaki-shi, Nagasaki 850-8610 (JP); TOKITSU, Satoshi, Nagasaki-shi, Nagasaki 850-8610 (JP)
(74) Representative: Hoffmann Eitle
(86) International application number: PCT/JP2019/049620
(87) International publication number: WO 2020/162053

(56) References cited:
- WO-A1-2017/187504
- JP-A- H0 771 845
- JP-A- 2000 104 940
- JP-A- 2013 100 807
- JP-A- 2014 126 344
- JP-A- 2014 190 216
- JP-A- 2017 067 392

## Description

### {Technical Field}

The present disclosure relates to an waste heat recovery system and a method of controlling the same.

### {Background Art}

Conventionally, an waste heat recovery system that recovers waste heat of a diesel engine of a ship and generates power from the recovered waste heat is known (for example, PTL 1) .

The waste heat recovery system disclosed in PTL 1 guides jacket cooling water discharged from a diesel engine to an evaporator and guides, to a turbine, a refrigerant evaporated by an evaporator by heat exchange with the jacket cooling water. The turbine is then rotated by the evaporated refrigerant, and in response, rotating power of the turbine is transmitted to a generator. The refrigerant that has passed through the turbine is condensed with seawater by a condenser. On the other hand, the jacket cooling water that has exchanged heat with the refrigerant is supplied to the diesel engine and used for cooling the diesel engine.

In the condenser, while heat is exchanged between the refrigerant and cooling water (seawater in PTL 1), if a plate inside the condenser is broken, the refrigerant may leak out of a refrigerant circuit to the cooling water side. If such leakage of the refrigerant continues, the refrigerant will be lost from the refrigerant circuit. Further, if the inner pressure of the refrigerant circuit from which the refrigerant has been lost decreases and becomes lower than the pressure of the cooling water flowing through the condenser, the cooling water will enter the refrigerant circuit, and this may cause corrosion of the refrigerant circuit.

However, even if the cooling water flowing through the condenser enters the refrigerant circuit as described above, it may be difficult to detect cooling water contained in the refrigerant.

To address this, as a method of detecting leakage of a refrigerant, for example, PTL 2 discloses determining leakage of a refrigerant from a Rankine cycle based on a change in the liquid level of the refrigerant stored in a liquid chamber of the Rankine cycle.

JP 2014 190216 A discloses a waste heat recovery system with a leackage detector provided to detect refrigerant in the cooling water of the engine.

### {Citation List}

### {Patent Literature}

{PTL 1} Japanese Patent Application Laid-Open 2012-215124
{PTL 2} Japanese Patent Application Laid-Open 2014-115008 {Summary of Invention}

### {Technical Problem}

When determining occurrence of leakage based on a liquid amount of a refrigerant filled in the Rankine cycle as disclosed in PTL 2, it may be not possible to detect occurrence of leakage at an early stage. This is because, in a refrigerant that repeats a phase change between a gas and a liquid, the liquid refrigerant has a smaller specific volume than the gas refrigerant, and it may take a considerable time for the liquid amount to change.

The present disclosure has been made in view of such circumstances and intends to provide an waste heat recovery system and a method of controlling the waste heat recovery system that can detect leakage of refrigerant relatively quickly even when the refrigerant leaks out of a refrigerant circuit.

### {Solution to Problem}

To solve the above problem, the waste heat recovery system and the method of controlling the waste heat recovery system of the present disclosure employ the following solutions.

That is, an waste heat recovery system according to one aspect of the present disclosure includes: a refrigerant circuit having a condenser configured to condense, by heat exchange with cooling water, a refrigerant that passed through a turbine rotated by the refrigerant evaporated by an evaporator; a cooling water pipe through which the cooling water that passed through the condenser flows; and a leakage detector provided to the cooling water pipe and configured to detect the refrigerant contained in the cooling water flowing through the cooling water pipe.

According to the waste heat recovery system of the present aspect, a refrigerant contained in a cooling water that has passed through the condenser and is flowing through the cooling water pipe (cooling water that has exchanged heat with the refrigerant by the condenser) can be detected by the leakage detector. Thus, even when the refrigerant leaks out of the refrigerant circuit to the cooling water pipe due to a phenomenon such as breakage of a plate inside the condenser, for example, the refrigerant leakage can be detected. Accordingly, for example, by controlling the waste heat recovery system to stop in response to detection of refrigerant leakage, it is possible to suppress a loss of the refrigerant or a phenomenon of entry of cooling water into the refrigerant circuit. If the cooling water enters the refrigerant circuit, there will be a concern of corrosion of the refrigerant circuit due to the cooling water.

Further, the leakage detector detects the refrigerant (gas refrigerant) contained in the cooling water flowing through the cooling water pipe and therefore can detect a slight refrigerant leakage compared to a case where leakage is detected based on the liquid amount of a liquid refrigerant filled in a refrigerant circuit, for example. This is obvious from the fact that gas refrigerants have a larger specific volume than liquid refrigerants. It is therefore possible to detect refrigerant leakage relatively quickly.

Further, in the waste heat recovery system according to one aspect of the present disclosure, the leakage detector includes a gas discharge valve provided perpendicularly above the cooling water pipe and a refrigerant detector configured to detect the refrigerant discharged from the gas discharge valve.

According to the waste heat recovery system of the present aspect, when refrigerant leakage is occurring, the refrigerant (gas refrigerant) contained in the cooling water flowing through the cooling water pipe can be automatically discharged by a gas discharge valve. Further, the refrigerant discharged from the gas discharge valve can be detected by the refrigerant detector. This enables detection of refrigerant leakage from the refrigerant circuit. At this time, since the gas discharge valve is provided perpendicularly above the cooling water pipe, the refrigerant contained in the cooling water is likely to be collected by the gas discharge valve. The gas discharge valve is provided to a pipe branched perpendicularly upward from a portion where a gas is likely to be retained, such as the top of the cooling water pipe, for example.

Note that the gas discharge valve may discharge not only a gas refrigerant but also only the air contained in the cooling water. In such a case, no detection is made by the refrigerant detector.

Further, in the waste heat recovery system according to one aspect of the present disclosure, the leakage detector includes a discharge pipe that is connected to the gas discharge valve and through which a gas discharged from the gas discharge valve flows. A discharge port of the discharge pipe is opened perpendicularly downward, and the refrigerant detector is provided perpendicularly below the discharge port.

In the waste heat recovery system according to the present aspect, the discharge pipe through which a discharged gas flows is connected to the gas discharge valve. Further, the discharge port of this discharge pipe is opened perpendicularly downward. Furthermore, the refrigerant detector is provided perpendicularly below this discharge port.

The gas refrigerant that has leaked has a larger specific gravity than the air and thus is likely to be detected by the refrigerant detector provided perpendicularly below the discharge port opened perpendicularly downward when the gas refrigerant is contained in the gas discharged from the gas discharge valve.

Further, the waste heat recovery system according to one aspect of the present disclosure includes a control unit configured to acquire leakage status of the refrigerant from the leakage detector, and when leakage of the refrigerant is detected by the leakage detector, an operation of the waste heat recovery system is stopped by the control unit.

According to the waste heat recovery system of the present aspect, when refrigerant leakage is detected by the leakage detector, the operation of the waste heat recovery system can be stopped by the control unit. If the operation of the waste heat recovery system were not stopped despite the occurrence of refrigerant leakage, the refrigerant would be lost from the refrigerant circuit, and further, the cooling water would enter the refrigerant circuit. By stopping the operation of the waste heat recovery system by the control unit, it is possible to prevent a refrigerant loss.

Further, a method of controlling an waste heat recovery system according to one aspect of the present disclosure is a method of controlling an waste heat recovery system including a refrigerant circuit having a condenser configured to condense, by heat exchange with cooling water, a refrigerant that passed through a turbine rotated by the refrigerant evaporated by an evaporator and a cooling water pipe through which the cooling water that passed through the condenser flows. The method includes: a leakage detection step of detecting the refrigerant contained in the cooling water flowing through the cooling water pipe; and a stopping step of stopping the waste heat recovery system when detecting the refrigerant by the leakage detection step.

### {Advantageous Effects of Invention}

According to the waste heat recovery system and the method of controlling the waste heat recovery system of the present disclosure, even when a refrigerant leaks out of a refrigerant circuit, it is possible to quickly detect the refrigerant leakage.

### {Brief Description of Drawings}

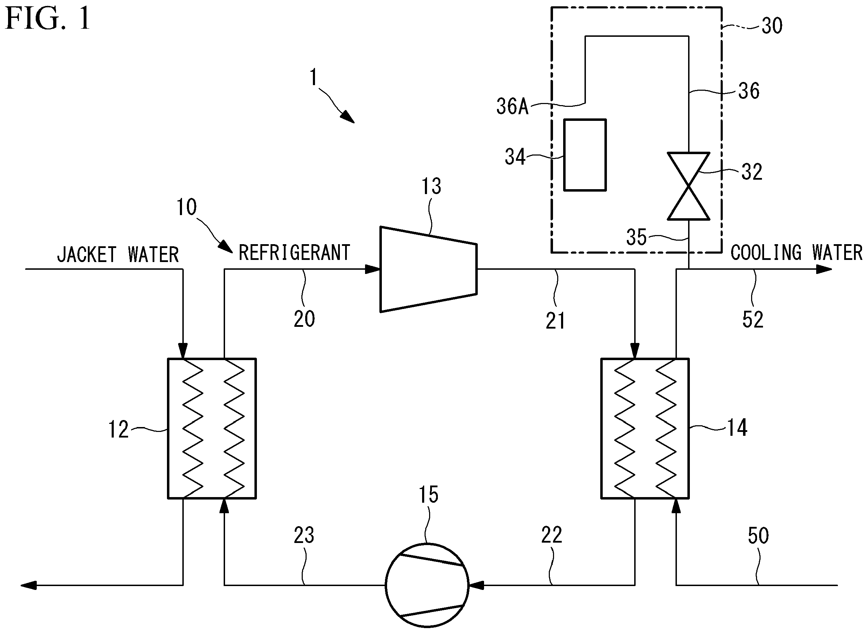

{Fig. 1}
Fig. 1 is a diagram illustrating a configuration of an waste heat recovery system according to one embodiment of the present disclosure.

### {Description of Embodiments}

An waste heat recovery system 1 according to one embodiment of the present disclosure will be described below with reference to the drawing.

The waste heat recovery system 1 is a device employed for an Organic Rankine Cycle (ORC) that generates power by transferring waste heat of jacket water used for cooling a diesel engine (not illustrated), for example, which is a main engine that generates propulsion power of a ship, to an organic fluid filled in a refrigerant circuit 10 through heat exchange and using the refrigerant to rotate a turbine 13 connected a generator (not illustrated).

As illustrated in Fig. 1, the waste heat recovery system 1 has the refrigerant circuit 10, a cooling water discharge pipe 52 (hereafter, simply referred to as "cooling water pipe 52") connected to a condenser 14 of the refrigerant circuit 10, and a leakage detector 30 provided to the cooling water pipe 52.

The refrigerant circuit 10 has an evaporator 12, the turbine 13, the condenser 14, and the pump 15, which are connected via a refrigerant pipe 20, a refrigerant pipe 21, a refrigerant pipe 22, and a refrigerant pipe 23, respectively, to form a circuit. The refrigerant circuit 10 is filled with an organic medium (for example, a refrigerant such as alternative chlorofluorocarbon, and hereafter, simply referred to as "refrigerant").

The evaporator 12 is a device that causes a refrigerant filled in the refrigerant circuit 10 to be subjected to heat exchange with jacket water increased in temperature by cooling of a diesel engine (not illustrated) and evaporates the refrigerant. The heat exchange is performed by heat exchange inside the evaporator 12.

The turbine 13 is a device rotated by the refrigerant evaporated by the evaporator 12. The turbine 13 is configured to be able to transmit rotating power to a generator (not illustrated). That is, the generator generates power by being driven by the turbine 13.

The condenser 14 is a device that causes a refrigerant, which has passed through the turbine 13, to exchange heat exchange with cooling water and condenses the refrigerant. The cooling water is seawater, for example, and is supplied to the condenser 14 via a cooling water supply pipe 50 connected to the cooling water input port of the condenser 14. The cooling water supplied to the condenser 14 exchanges heat with the refrigerant filled in the refrigerant circuit 10 while passing through the condenser 14. The cooling water that has passed through the condenser 14 (cooling water that has exchanged heat with the refrigerant in the condenser 14) is discharged to the outside of the condenser 14 via a cooling water pipe 52 connected to the cooling water exit port of the condenser 14.

The pump 15 is a device that delivers a refrigerant condensed and liquefied by the condenser 14 to the evaporator 12 side via the refrigerant pipe 23 to form a refrigerant flow in the refrigerant circuit 10.

With the configuration described above, the refrigerant circuit 10 is configured in which a refrigerant flow is formed in the order of the evaporator 12, the refrigerant pipe 20, the turbine 13, the refrigerant pipe 21, the condenser 14, the refrigerant pipe 22, the pump 15, and the refrigerant pipe 23.

In the waste heat recovery system 1 according to the present embodiment, the leakage detector 30 is provided in the cooling water pipe 52 through which the cooling water that has passed through the condenser 14 flows.

The leakage detector 30 is a device that, when a refrigerant is contained in cooling water flowing through the cooling water pipe 52, detects the refrigerant.

Note that the pressure of cooling water flowing through the cooling water pipe 52 connected to the cooling water exit port of the condenser 14 (downstream of the condenser 14 in the cooling water flow direction) is approximately the ambient pressure. Thus, when a pressurized refrigerant leaks to the cooling water flowing through the cooling water pipe 52, a refrigerant is gasified into a gas refrigerant due to a reduced pressure. Therefore, the leakage detector 30 is a device that mainly detects a gas refrigerant contained in cooling water flowing through the cooling water pipe 52.

The leakage detector 30 will be described below in detail.

As illustrated in Fig. 1, the leakage detector 30 has a gas discharge valve 32 and a refrigerant detector 34.

The gas discharge valve 32 is a valve that can discharge a gas to the outside automatically when a certain amount of the gas is retained therein, and the gas discharge valve 32 is provided to a branch pipe 35.

As the gas discharge valve 32, a float type valve is used, for example. The float type valve is configured such that a float floating on a liquid inside the valve vertically moves in accordance with a change in the liquid level inside the valve and closes and opens a valve. In details, when a gas is collected inside the valve enclosing a liquid therein with a predetermined liquid level being maintained and thereby the liquid having a larger specific gravity than a gas is pushed downward by the gas, the valve is opened by the float floating on the liquid. When the gas is discharged by the opened valve, and the liquid level, which has been pushed downward by the gas, rises and thereby returns to the original liquid level, the valve is closed by the float floating on the liquid.

The branch pipe 35 is a pipe whose upstream base end is connected to the cooling water pipe 52 and is branched and extends perpendicularly upward. In this state, a section of the cooling water pipe 52 to which the base end of the branch pipe 35 is connected is preferably a section such as the top of the cooling water pipe 52 where a gas is likely to be collected due to buoyant force. This facilitates that a gas contained in cooling water flowing through the cooling water pipe 52 is collected in the gas discharge valve 32. Further, the gas discharge valve 32 is preferably provided perpendicularly above the branch pipe 35. This facilitates that the gas inside the branch pipe 35 is collected in the gas discharge valve 32.

The gas discharge valve 32 is connected to a discharge pipe 36 through which the gas discharged from the gas discharge valve 32 flows.

The discharge pipe 36 extends perpendicularly upward from the gas discharge valve 32 and is then bent in an inverse U-shape, and a discharge port 36A is thereby opened perpendicularly downward. Note that the discharge port 36A is an open end and is surrounded by an air atmosphere.

The refrigerant detector 34 is provided perpendicularly below the discharge port 36A. When a refrigerant is contained in an air discharged from the discharge port 36A, the refrigerant detector 34 can detect the refrigerant. In this situation, when a gas discharged from the gas discharge valve 32 is a mixture gas of the air and the gas refrigerant, for example, the gas refrigerant having a larger specific gravity than the air can be separated from the air and guided to the refrigerant detector 34 if the refrigerant detector 34 is installed below the discharge port 36A. As the refrigerant detector 34, a resistor type sensor is used, for example.

The leakage detector 30 operates as follows.

That is, a gas contained in the cooling water flowing through the cooling water pipe 52 is collected in the gas discharge valve 32 via the branch pipe 35.

When a certain amount of gas is retained inside the gas discharge valve 32, the gas discharge valve 32 automatically discharges the gas to the outside.

The discharged gas is discharged from the discharge port 36A to the air via the discharge pipe 36.

At this time, some refrigerant may be contained in the discharged gas. For example, if a plate for heat exchange installed inside the condenser 14 is broken, the refrigerant leaks out of the refrigerant circuit 10 to the cooling water side (the cooling water pipe 52). Then, the refrigerant that has leaked is mixed in the cooling water, flows through the cooling water pipe 52, and is consequently collected as a gas by the gas discharge valve 32.

As described above, when a refrigerant is contained in the discharged gas, the refrigerant detector 34 detects the refrigerant (leakage detection step). Note that, even when no refrigerant is leaking, a gas may be discharged from the gas discharge valve 32 when air is mixed in the cooling water. When only the air is discharged, however, the refrigerant detector 34 will of course not react.

If the refrigerant detector 34 detects the refrigerant, the refrigerant detector 34 transmits the information on the detection to the control unit (not illustrated).

The control unit is formed of a central processing unit (CPU), a random access memory (RAM), a read only memory (ROM), a computer readable storage medium, and the like, for example. Further, as an example, a series of processes to implement various functions is stored in a storage medium or the like in a form of a program. The CPU reads such a program into the RAM or the like and executes a process of edition and operation of information, and thereby various functions are implemented. Note that a form in which a program is installed in advance in a ROM or other storage mediums, a form in which a program is provided in a state of being stored in a computer readable storage medium, a form in which a program is delivered via a wired or wireless communication unit, or the like may be applied. The computer readable storage medium is a magnetic disk, a magneto-optical disk, a CD-ROM, a DVD-ROM, a semiconductor memory, or the like.

In response to receiving a refrigerant detection signal from the refrigerant detector 34, the control unit determines that the refrigerant leaks out of the refrigerant circuit 10 to the cooling water side. If it is determined by the control unit that the refrigerant leaks, the operation of the waste heat recovery system 1 is stopped by the control unit (stopping step).

According to the present embodiment, the following advantageous effects are achieved.

Even if a refrigerant leaks out of the refrigerant circuit 10 to the cooling water pipe 52 due to a phenomenon such as breakage of a plate for heat exchange provided inside the condenser 14, leakage of the refrigerant can be detected by the leakage detector 30. When leakage of the refrigerant is detected, by controlling the waste heat recovery system 1 to stop, it is possible to suppress a loss of the refrigerant from the refrigerant circuit 10 or a phenomenon of entry of cooling water into the refrigerant circuit 10.

Note that, in a case of an waste heat recovery system other than the ORC, for example, in a case of a heat exchanger that performs heat exchange between pure water and seawater, when seawater leaks into a pipe through which the pure water flows, it is possible to easily detect the seawater leakage by detecting a change in conductivity of the pure water. In the case of an waste heat recovery system employing the ORC, however, it is difficult to detect leakage because the refrigerant is non-conductive, and a detection method utilizing a change in conductivity is not suitable. Further, even if a refrigerant were successfully detected by the detection method utilizing a change in conductivity, it would be considered that a considerable amount of the refrigerant has already leaked at the time of detection. This would cause not only a refrigerant loss but also pollution of the external environment.

Further, the leakage detector 30 detects a gas refrigerant contained in cooling water flowing through the cooling water pipe 52 and thus can detect a slight refrigerant leakage compared to a case where leakage is detected based on a liquid amount of a liquid refrigerant filled in the refrigerant circuit 10, for example. This is obvious from the fact that gas refrigerants have a larger specific volume than liquid refrigerants. It is therefore possible to detect refrigerant leakage relatively quickly.

Further, the gas refrigerant that has leaked has a larger specific gravity than the air and thus is likely to be detected by the refrigerant detector 34 provided perpendicularly below the discharge port 36A opened perpendicularly downward when the gas refrigerant is contained in the gas discharged from the gas discharge valve 32.

### {Reference Signs List}

- 1: waste heat recovery system
- 10: refrigerant circuit
- 12: evaporator
- 13: turbine
- 14: condenser
- 15: pump
- 20, 21, 22, 23: refrigerant pipe
- 30: leakage detector
- 32: gas discharge valve
- 34: refrigerant detector
- 35: branch pipe
- 36: discharge pipe
- 36A: discharge port
- 50: cooling water supply pipe
- 52: cooling water discharge pipe (cooling water pipe)

## Claims

1. A waste heat recovery system comprising:
a refrigerant circuit having a condenser configured to condense, by heat exchange with cooling water, a refrigerant that passed through a turbine rotated by the refrigerant evaporated by an evaporator;
a cooling water pipe through which the cooling water that passed through the condenser flows; and
a leakage detector provided to the cooling water pipe and configured to detect the refrigerant contained in the cooling water flowing through the cooling water pipe,
wherein the leakage detector has a gas discharge valve provided perpendicularly above the cooling water pipe, a refrigerant detector configured to detect the refrigerant discharged from the gas discharge valve, and a discharge pipe that is connected to the gas discharge valve and through which a gas discharged from the gas discharge valve flows, and
wherein a discharge port of the discharge pipe is opened perpendicularly downward, and the refrigerant detector is provided perpendicularly below the discharge port.

2. The waste heat recovery system according to claim 1 further comprising a control unit configured to acquire leakage status of the refrigerant from the leakage detector,
wherein when leakage of the refrigerant is detected by the leakage detector, an operation of the waste heat recovery system is stopped by the control unit.

3. A method of controlling a waste heat recovery system comprising a refrigerant circuit having
a condenser configured to condense, by heat exchange with cooling water, a refrigerant that passed through a turbine rotated by the refrigerant evaporated by an evaporator,
a cooling water pipe through which the cooling water that passed through the condenser flows, and
a leakage detector provided to the cooling water pipe and configured to detect the refrigerant contained in the cooling water flowing through the cooling water pipe,
wherein the leakage detector has a gas discharge valve provided perpendicularly above the cooling water pipe, a refrigerant detector configured to detect the refrigerant discharged from the gas discharge valve, and a discharge pipe that is connected to the gas discharge valve and through which a gas discharged from the gas discharge valve flows, and
wherein a discharge port of the discharge pipe is opened perpendicularly downward, and the refrigerant detector is provided perpendicularly below the discharge port,
the method comprising:
a leakage detection step of detecting the refrigerant contained in the cooling water flowing through the cooling water pipe; and
a stopping step of stopping the waste heat recovery system when detecting the refrigerant by the leakage detection step.

## Patentansprüche

1. System zur Rückgewinnung von Abwärme, umfassend:
einen Kältemittelkreislauf, der einen Kondensator aufweist, der konfiguriert ist, um durch Wärmeaustausch mit Kühlwasser ein Kältemittel zu kondensieren, das durch eine Turbine hindurch verlaufen ist, die durch das Kältemittel, das durch einen Verdampfer verdampft wird, in Drehung versetzt wird;
ein Kühlwasserrohr, durch welches das Kühlwasser, das durch den Kondensator hindurch verlaufen ist, fließt; und
einen Leckagedetektor, der für das Kühlwasserrohr vorgesehen ist, und konfiguriert ist, um das Kältemittel, das in dem Kühlwasser enthalten ist, das durch das Kühlwasserrohr fließt, zu detektieren,
wobei der Leckagedetektor ein Gasauslassventil aufweist, das senkrecht oberhalb des Kühlwasserrohres vorgesehen ist, einen Kältemitteldetektor, der konfiguriert ist, um das Kältemittel, das aus dem Gasauslassventil ausgelassen wird, zu detektieren, und ein Auslassrohr, das mit dem Gasauslassventil verbunden ist, und durch welches ein Gas, das aus dem Gasauslassventil ausgelassen wird, fließt, und
wobei ein Auslassanschluss des Auslassrohres senkrecht stromabwärts geöffnet ist, und der Kältemitteldetektor senkrecht unterhalb des Auslassanschlusses vorgesehen ist.

2. System zur Rückgewinnung von Abwärme nach Anspruch 1, weiter umfassend eine Steuereinheit, die konfiguriert ist, um einen Leckagestatus des Kältemittels von dem Leckdetektor zu erfassen,
wobei, wenn die Leckage des Kältemittels durch den Leckagedetektor detektiert wird, ein Betrieb des Systems zur Rückgewinnung von Abwärme durch die Steuereinheit gestoppt wird.

3. Verfahren zum Steuern eines Systems zur Rückgewinnung von Abwärme, umfassend einen Kältemittelkreislauf, der Folgendes aufweist
einen Kondensator, der konfiguriert ist, um durch Wärmeaustausch mit Kühlwasser ein Kältemittel zu kondensieren, das durch eine Turbine hindurch verlaufen ist, die durch das Kältemittel, das durch einen Verdampfer verdampft wird, in Drehung versetzt wird;
ein Kühlwasserrohr, durch welches das Kühlwasser, das durch den Kondensator hindurch verlaufen ist, fließt, und
einen Leckagedetektor, der für das Kühlwasserrohr vorgesehen ist, und konfiguriert ist, um das Kältemittel, das in dem Kühlwasser enthalten ist, das durch das Kühlwasserrohr fließt, zu detektieren,
wobei der Leckagedetektor ein Gasauslassventil aufweist, das senkrecht oberhalb des Kühlwasserrohres vorgesehen ist, einen Kältemitteldetektor, der konfiguriert ist, um das Kältemittel, das aus dem Gasauslassventil ausgelassen wird, zu detektieren, und ein Auslassrohr, das mit dem Gasauslassventil verbunden ist, und durch welches ein Gas, das aus dem Gasauslassventil ausgelassen wird, fließt, und
wobei ein Auslassanschluss des Auslassrohres senkrecht stromabwärts geöffnet ist, und der Kältemitteldetektor senkrecht unterhalb des Auslassanschlusses vorgesehen ist,
wobei das Verfahren umfasst:
einen Leckagedetektionsschritt zum Detektieren des Kältemittels, das in dem Kühlwasser enthalten ist, das durch das Kühlwasserrohr fließt; und
einen Stoppschritt zum Stoppen des Systems zur Rückgewinnung von Abwärme, wenn das Kältemittel durch den Leckagedetektionsschritt detektiert wird.

## Revendications

1. Système de récupération de chaleur perdue comprenant :
un circuit de fluide frigorigène présentant un condenseur configuré pour condenser, par un échange de chaleur avec de l'eau de refroidissement, un fluide frigorigène qui a traversé une turbine mise en rotation par le fluide frigorigène évaporé par un évaporateur ;
un tuyau d'eau de refroidissement à travers lequel s'écoule l'eau de refroidissement qui a traversé le condenseur ; et
un détecteur de fuite disposé sur le tuyau d'eau de refroidissement et configuré pour détecter le fluide frigorigène contenu dans l'eau de refroidissement s'écoulant à travers le tuyau d'eau de refroidissement,
dans lequel le détecteur de fuite présente un clapet de décharge de gaz disposé perpendiculairement au-dessus du tuyau d'eau de refroidissement, un détecteur de fluide frigorigène configuré pour détecter le fluide frigorigène déchargé depuis le clapet de décharge de gaz, et un tuyau de décharge qui est raccordé au clapet de décharge de gaz et à travers lequel s'écoule un gaz déchargé depuis le clapet de décharge de gaz, et
dans lequel un orifice de décharge du tuyau de décharge est ouvert perpendiculairement vers le bas, et le détecteur de fluide frigorigène est disposé perpendiculairement sous l'orifice de décharge.

2. Système de récupération de chaleur perdue selon la revendication 1 comprenant en outre une unité de commande configurée pour acquérir un état de fuite du fluide frigorigène depuis le détecteur de fuite,
dans lequel lorsqu'une fuite du fluide frigorigène est détectée par le détecteur de fuite, une opération du système de récupération de chaleur perdue est arrêtée par l'unité de commande.

3. Procédé de commande d'un système de récupération de chaleur perdue comprenant un circuit de fluide frigorigène présentant
un condenseur configuré pour condenser, par un échange de chaleur avec de l'eau de refroidissement, un fluide frigorigène qui a traversé une turbine mise en rotation par le fluide frigorigène évaporé par un évaporateur,
un tuyau d'eau de refroidissement à travers lequel s'écoule l'eau de refroidissement qui a traversé le condenseur, et
un détecteur de fuite disposé sur le tuyau d'eau de refroidissement et configuré pour détecter le fluide frigorigène contenu dans l'eau de refroidissement s'écoulant à travers le tuyau d'eau de refroidissement,
dans lequel le détecteur de fuite présente un clapet de décharge de gaz disposé perpendiculairement au-dessus du tuyau d'eau de refroidissement, un détecteur de fluide frigorigène configuré pour détecter le fluide frigorigène déchargé depuis le clapet de décharge de gaz, et un tuyau de décharge qui est raccordé au clapet de décharge de gaz et à travers lequel s'écoule un gaz déchargé depuis le clapet de décharge de gaz, et
dans lequel un orifice de décharge du tuyau de décharge est ouvert perpendiculairement vers le bas, et le détecteur de fluide frigorigène est disposé perpendiculairement sous l'orifice de décharge,
le procédé comprenant :
une étape de détection de fuite consistant à détecter le fluide frigorigène contenu dans l'eau de refroidissement s'écoulant à travers le tuyau d'eau de refroidissement ; et
une étape d'arrêt consistant à arrêter le système de récupération de chaleur perdue lors de la détection du fluide frigorigène par l'étape de détection de fuite.
